Europäisches Patentamt

European Patent Office

Office européen des brevets

(11) Veröffentlichungsnummer: **0 150 349**
**A2**

(12) # EUROPÄISCHE PATENTANMELDUNG

(21) Anmeldenummer: **84114849.7**

(51) Int. Cl.⁴: **H 04 M 1/03**

(22) Anmeldetag: **06.12.84**

(30) Priorität: **26.01.84 DE 3402639**

(43) Veröffentlichungstag der Anmeldung: **07.08.85**
**Patentblatt 85/32**

(84) Benannte Vertragsstaaten: **AT BE CH DE FR GB IT LI LU NL**

(71) Anmelder: **Siemens Aktiengesellschaft, Berlin und München Wittelsbacherplatz 2, D-8000 München 2 (DE)**

(72) Erfinder: **Schneider, Hannes, Dipl.-Ing., Springerstrasse 8, D-8000 München 71 (DE)**
Erfinder: **Luger, Johann, Arnoldstrasse 5, D-8000 München 50 (DE)**

(54) **Handapparat für Fernsprechstationen.**

(57) Die Erfindung bezieht sich auf einen aus einem Gehäuseoberteil (1) und Gehäuseunterteil (2) bestehenden Handapparatekörper mit je einer in Aufnahmemulden befestigten Hör- und Sprechkapsel (5, 6).

Aufgabe der Erfindung ist die Verbesserung der Körperschallentkopplung zwischen Hör- und Sprechkapsel.

Gelöst wird die Aufgabe dadurch, daß der Innenraum des Handapparatekörpers durch einen akustisch dämpfenden Stoff (11) ausgefüllt ist.

Siemens Aktiengesellschaft          Unser Zeichen
Berlin und München                  VPA 84 P 1043 E

Handapparat für Fernsprechstationen

Die Erfindung betrifft einen aus Gehäuseoberteil und Gehäuseunterteil bestehenden Handapparatekörper für Fernsprechstationen mit je einer in Aufnahmemulden befestigten Hör- und Sprechkapsel.

Bei Handapparaten für Fernsprechstationen tritt das Problem auf, daß aufgrund einer akustischen Kopplung zwischen Hör- und Sprechkapsel bzw. über den Handapparatekörper auf die Sprechkapsel übertragene Geräusche unerwünschte Signale gebildet und übertragen werden. Weiterhin wird es als unangenehm empfunden, wenn aufgrund einer akustischen Kopplung zwischen Hör- und Sprechkapsel Pfeiftöne oder "Hall"effekte auftreten.

### Stand der Technik

Zur Körperschallentkopplung zwischen Hör- und Sprechkapsel ist es durch die DE-PS 23 09 978 bekannt, die elektroakustischen Wandler in separaten, elastischen und topfförmigen Annahmen unterzubringen, die wiederum ihrerseits mit dem Handapparatekörper verbunden sind.

Heutzutage werden vorwiegend in Handapparaten von Fernsprechstationen piezoelektrische Wandler eingesetzt. Diese Wandler sind auswechselungs- und wartungsfrei.

### Aufgabe der Erfindung

Aufgabe der vorliegenden Erfindung ist es, einen Handapparat zu schaffen, welcher eine Körperschallentkopplung zwischen Sprech- und Hörkapsel aufweist und der unter Vermeidung von separaten Lagerkörpern kostengünstig zu fertigen ist.

## Lösung der Aufgabe

Gemäß der Erfindung wird die Aufgabe dadurch gelöst, daß der Innenraum des Handapparatekörpersdurch einen akustisch dämpfenden Stoff zumindest teilweise aufgefüllt ist.

Durch diesen Hartschaum wird die Kopplung zwischen Hör- und Sprechkapsel wesentlich verringert. Der sogenannte Pfeifabstand kann dadurch gegenüber der in der DE-PS 23 09 978 dargestellten Ausführung um den Faktor 2 verbessert werden. Durch den Hartschaum wird weiterhin das Gewicht des Handapparatekörpers erhöht, wodurch dieser eine sichere Betätigung des Gabelumschalters der Fernsprechstation bewirkt. Weiterhin wird das Handapparategehäuse stabiler und verwindungssteifer.

Ein wesentlicher Vorteil der Entkopplung der Kapseln ist insbesondere bei digitalen Fernsprechern gegeben. Durch die Technik der Digitalübertragung werden die Signale praktisch dämpfungsfrei übertragen. Ein Klopfen auf den Handapparatekörper und eine Überleitung des Schalls auf die Sprechkapsel würde zu Fehlsignalen führen, die auf der Empfängerseite zu unerwünschten Geräuschen führen würde, deren Pegel im Bereich der Nutzsignale liegt. Solche Fernsprecher würden zu unerträglichen Störungen führen, die unannehmbar sind.

## Ausführungsbeispiel

Im folgenden sei die Erfindung anhand von einem Ausführungsbeispiel näher erläutert, das eine geschnittene Ansicht eines Handapparatekörpers darstellt.

Der Handapparatekörper ist zweiteilig ausgebildet und besteht aus einem Gehäuseoberteil 1 und mit diesem verbundenen Gehäuseunterteil 2. Die beiden Teile sind durch nicht näher gezeigte Rastverbindungen untereinander befestigt. In dem Gehäuseunterteil 2 sind topfförmige Aufnahmemulden 3, 4 vorgesehen, die zur Fixierung der Hör- und Sprechkapseln 5, 6 dienen. Zur Befestigung der Hör- und Sprechkapseln dienen einstückig mit dem Gehäuseunterteil verbundene Rasthaken 7, die mit den Kapseln eine Rastverbindung eingehen. Die Kapseln sind über Steckverbindungen einer Anschlußschnur 8 mit der Fernsprechstation verbunden, wobei die elektrischen Zuführungen in nicht näher dargestellten Kanälen geführt und gehaltert sind. Im zusammengefügtem Zustand von Gehäuseoberteil und -unterteil werden die Kapseln durch angespritzte Rippen 9 und Stege 10 bei plötzlich auftretenden Stoßlastungen in ihrer Hubbewegung begrenzt.

Um die Körperschallentkopplung zwischen Sprech- und Hörkapsel zu verbessern, ist der gesamte Innenraum des Handapparatekörpers mit einem Hartschaum 11 ausgefüllt.

2 Patentansprüche
1 Figur

VPA 34 P 1043 *E*
                                                    0150349

Bezugszeichenliste

1   Gehäuseoberteil
2   Gehäuseunterteil
3
    Aufnahmemulde
4
5   Hörkapsel
6   Sprechkapsel
7   Rasthaken
8   Anschlußschnur
9   Rippe
10  Steg
11  Hartschaum

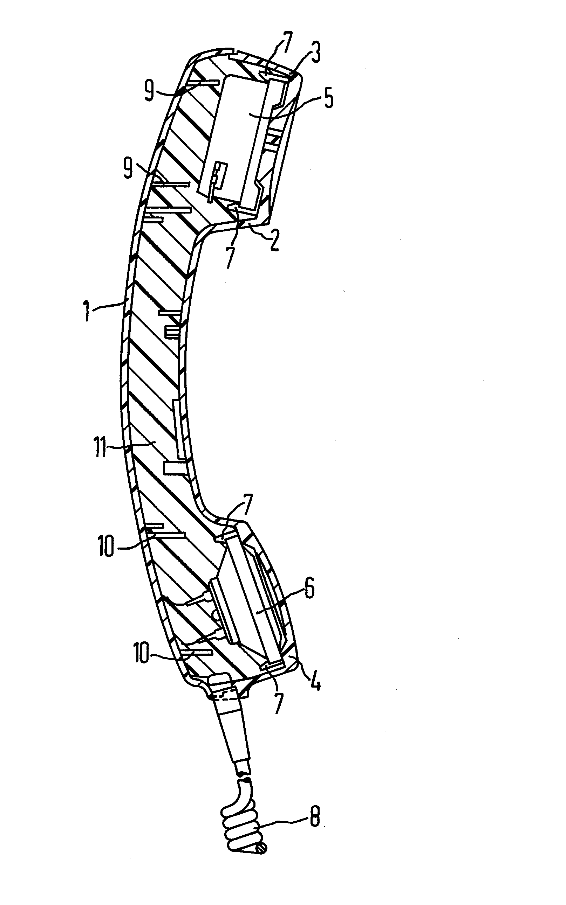

Patentansprüche

1. Aus einem Gehäuseoberteil und Gehäuseunterteil bestehender Handapparatekörper für Fernsprechstationen mit
je einer in Aufnahmemulden befestigten Hör- und Sprechkapsel, d a d u r c h g e k e n n z e i c h n e t ,
daß der Innenraum des Handapparatekörpers durch einen
akustisch dämpfenden Stoff zumindest teilweise ausgefüllt ist.

2. Gehäuseoberteil und Gehäuseunterteil nach Anspruch 1,
daß der akustisch dämpfende Stoff ein Hartschaum ist.

0150349

1/1